# EUROPÄISCHE PATENTANMELDUNG

(11) **EP 0 859 184 A1**
(43) Veröffentlichungstag der Anmeldung: **19.08.1998**
(21) Anmeldenummer: 98100955.8
(22) Anmeldetag: 21.01.1998
(51) Int. Cl.: F16L 25/08, F16L 41/08, F24D 3/10

(54) **Vorrichtung zum Verteilen und Sammeln von flüssigen Medien, insbesondere Vor- und Rücklaufverteiler von Heizwasser**

(30) Priorität: 14.02.1997 DE 29702573 U
(71) Anmelder: Maatz, Alfons, 46395 Bocholt (DE)
(72) Erfinder: Maatz, Alfons, 46395 Bocholt (DE)
(74) Vertreter: Patentanwälte Meinke, Dabringhaus und Partner

(57) **Zusammenfassung**

Eine Vorrichtung zum Verteilen bzw. Sammeln von flüssigen oder gasförmigen Medien auf bzw. aus einer Mehrzahl von Rohrleitungen, insbesondere Vor- und Rücklaufverteiler von Heizwasser, mit einer Mehrzahl von Rohrleitungsanschlüssen, wobei der Verteiler je Rohranschluß mit einer Kupplungsmuffe versehen ist, die mit einem Rohranschlußelement kombinierbar ist, soll derart ausgestattet werden, daß sie unterschiedlichen Einsatzzwecken schnell und einfach anpaßbar ist, so daß sie vorgefertigt auf Lager gehalten werden kann.

Dies wird dadurch erreicht, daß das Rohranschlußelement als Kupplungsanschlußnippel (10) ausgebildet ist mit einer außenseitigen Rundnut (11), wobei die Kupplungsmuffe (7) mit wenigstens einer Fixierschraube (12) od. dgl. zum Eingriff

in die Rundnut (11) versehen ist.

## Beschreibung

Die Erfindung richtet sich auf eine Vorrichtung zum Verteilen bzw. Sammeln von flüssigen oder gasförmigen Medien auf bzw. aus einer Mehrzahl von Rohrleitungen der im Oberbegriff des Anspruches 1 angegebenen Gattung, wie sie beispielsweise aus dem DE-U-80 09 169 oder dem DE-U-89 11 250 bekannt ist.

Um hier ein weiteres Beispiel eines Heizwasserverteilers zu nennen, sei auf die DE-42 30 226-C2 des Anmelders verwiesen mit weiteren Hinweisen zum Stand der Technik. Die bekannten Lösungen werden in der Regel den jeweiligen Einsatzzwecken entsprechend individuell angepaßt, d.h. die Vor- und Rücklaufkammern werden mit angeschweißten Rohrstutzen versehen, die dem weiteren Sammel- bzw. Verteilsystem entsprechen, was Auslegung und Durchmesser angeht. Durch diese individuelle Anpassung an den jeweiligen Einsatzzweck ist es nicht oder nur im beschränkten Maße möglich, derartige Verteiler vorzufertigen und auf Lager zu halten.

Hier setzt die Erfindung ein, deren Aufgabe es ist, eine derartige Vorrichtung so auszustatten, daß sie unterschiedlichen Einsatzzwecken schnell und einfach anpaßbar ist, so daß sie vorgefertigt auf Lager gehalten werden kann.

Mit einer Vorrichtung der eingangs bezeichneten Art wird diese Aufgabe gemäß der Erfindung dadurch gelöst, daß das Rohranschlußelement als Kupplungsanschlußnippel ausgebildet ist mit einer außenseitigen Rundnut, wobei die Kupplungsmuffe mit wenigstens einer Fixierschraube od. dgl. zum Eingriff in die Rundnut versehen ist.

Dadurch, daß die Vorrichtung mit der entsprechenden Anzahl von Kupplungsmuffen ausgerüstet ist, in die Rohrleitungskupplungsnippel anbringbar sind, kann ein solcher Verteiler vorgefertigt werden. Wird er dann benötigt, bedarf es nur der Kupplung mit den dem individuellen Einsatzzweck angepaßten Kupplungsnippeln, besondere Montage- oder Fertigungsschritte sind dabei im wesentlichen entbehrlich.

In Ausgestaltung sieht die Erfindung vor, daß die Kupplungsmuffe auf ihrer Innenseite mit einer Dichtfläche und der Kupplungsanschlußnippel mit wenigstens einer mit dieser Dichtfläche zusammenwirkenden Ringdichtung versehen ist.

Durch die Kombination von Ringdichtung und Dichtfläche ist gewährleistet, daß ein dichter Anschluß zwischen der Verteilervorrichtung und den Heizwasser-Verteilerleitungen erfolgt, weitere Maßnahmen sind in der Regel dann nicht mehr notwendig.

Vorteilhaft ist, daß der Kupplungsanschlußnippel mit einer außenseitigen Rundnut und die Kupplungsmuffe mit wenigstens einer Fixierschraube od. dgl. zum Eingriff in die Rundnut versehen ist, so daß Kupplungsanschlußnippel und Kupplungsmuffe fest miteinander mit einfachen Mitteln verbindbar sind. Ein unbeabsichtigtes Auseinanderziehen der Verbindung ist damit nicht mehr möglich. Gleichzeitig ist gewährleistet, daß ein gewolltes Entkuppeln, z.B. durch Lösen der Fixierschraube, möglich gemacht wird.

Es versteht sich von selbst, daß die Kupplungsnippel mit unterschiedlichen Rohranschlußstutzen versehen sein können. Hier können eine Mehrzahl von in den Durchmessern unterschiedliche Anschlußnippel bereitgehalten werden, die je nach Einsatzzweck dann mit dem Verteiler kombiniert werden.

Als besonders zweckmäßig hat sich erwiesen, wenn der Kupplungsnippel mit wenigstens zwei O-Dichtringen versehen ist, um eine entsprechende Dichtigkeit zu gewährleisten.

Weitere Merkmale, Einzelheiten und Vorteile der Erfindung ergeben sich aufgrund der nachfolgenden Beschreibung sowie anhand der Zeichnung. Diese zeigt in
- Fig. 1: eine vereinfachte Seitenansicht der erfindungsgemäßen Vorrichtung,
- Fig. 2: einen Schnitt, etwa gemäß Linie II-II in Fig. 1,
- Fig. 3: eine vergrößerte Darstellung eines Anschlußbereiches, etwa nach Kreis III-III in Fig. 1 sowie in den
- Fig. 4 und 5: Einzeldarstellungen einer Kupplungsmuffe und eines Kupplungsnippels nach der Erfindung.

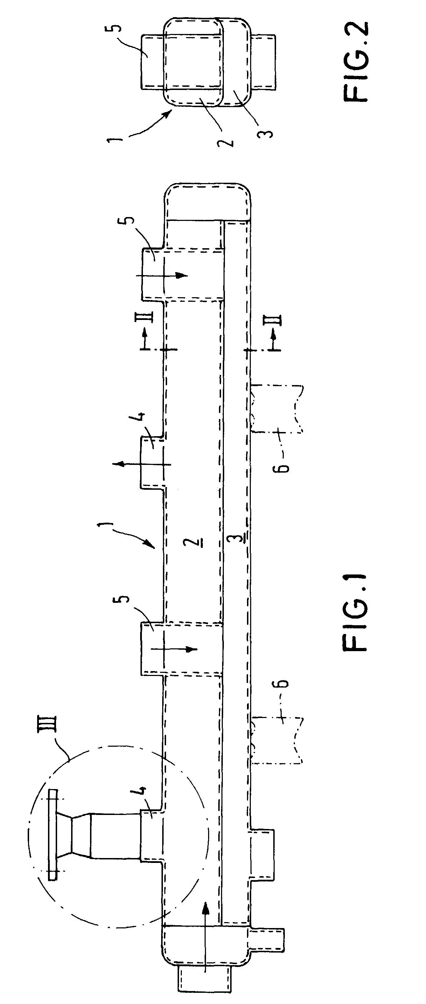

Eine in Fig. 1 vereinfachte, allgemein mit 1 bezeichnete Vorrichtung weist eine Vorlaufkammer 2 und eine Rücklaufkammer 3 auf sowie eine Mehrzahl von der Vorlaufkammer zugeordneten Rohranschlüssen 4 und der Rücklaufkammer zugeordneten Rohranschlüssen 5, wobei der Verteiler 1 auf nur andeutungsweise wiedergegebenen Ständern 6 positioniert ist, worauf es hier nicht näher ankommt.

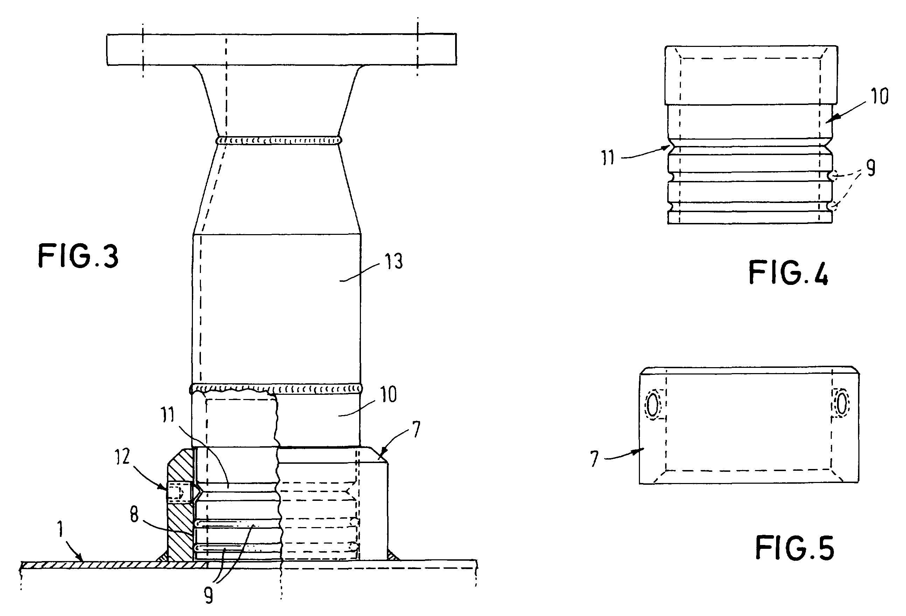

Die Rohranschlüsse 4 und 5 sind erfindungsgemäß als Kupplungsmuffen 7 ausgestaltet, die in den Fig. 3 und 5 näher dargestellt sind.

Jede der Kupplungsmuffen 7 ist mit dem Gehäuse des Verteilers 1 verschweißt, wobei die zur Rücklaufkammer führenden Rohranschlüsse 5 durch die Vorlaufkammer 2 hindurch verlängert ausgebildet sind, wie sich aus Fig. 1 ergibt, diese Gestaltung ist in Fig. 3 nicht näher dargestellt.

Erkennbar ist die Kupplungsmuffe 7 mit einer Innendichtfläche 8 ausgerüstet, an die sich im Beispiel der Fig. 3 zwei O-Ringe 9 dichtend anlegen, mit denen ein Rohranschluß-Kupplungsnippel 10 ausgerüstet ist, der in Fig. 4 als Einzelelement in Seitenansicht dargestellt ist.

Der Kupplungsnippel 10 weist neben den Nuten für die Ringdichtungen 9 eine weitere umlaufende Rundnut 11 auf, die zur Fixierung des Nippels 10 in der Muffe 7 dient, wobei wenigstens eine Fixierschraube 12 in der Kupplungsmuffe 7 vorgesehen ist, die in die Rundnut 11 einschraubbar ist, um den Nippel 10 zu fixieren.

Der Kupplungsnippel 10 kann mit unterschiedlichen Rohranschlußstutzen 13 ausgerüstet sein, deren Durchmesser und Gestaltung sich nach dem jeweiligen Einsatzzweck richten. Einheiten aus Rohranschlußstutzen 13 und Kupplungsanschlußnippel 10 können in unterschiedlichen Gestaltungen auf Lager gehalten werden, um nach Abruf des Verteilers 1 mit diesem versehen zu werden, um den Kunden dann fertig zur Verfügung gestellt zu werden.

Natürlich ist das beschriebene Ausführungsbeispiel der Erfindung noch in vielfacher Hinsicht abzuändern, ohne den Grundgedanken zu verlassen. So kann insbesondere auch vorgesehen sein, werkseitig vorab die Vorrichtung mit einer Norm-Isolierung auszurüsten, die dann ebenfalls die Kupplungsmuffen 7 umgibt, was in den Figuren nicht näher dargestellt ist, u. dgl. mehr.

Die hier beanspruchte Verbindungstechnologie kann neben der Kupplung von Rohranschlüssen an Heißwasserverteilern auch als Kupplung für Rohre untereinander herangezogen werden, wie dies nach der Erfindung ebenfalls vorgesehen ist.

## Patentansprüche

1. Vorrichtung zum Verteilen bzw. Sammeln von flüssigen oder gasförmigen Medien auf bzw. aus einer Mehrzahl von Rohrleitungen, insbesondere Vor- und Rücklaufverteiler von Heizwasser, mit einer Mehrzahl von Rohrleitungsanschlüssen, wobei der Verteiler je Rohranschluß mit einer Kupplungsmuffe versehen ist, die mit einem Rohranschlußelement kombinierbar ist,
dadurch gekennzeichnet,
daß das Rohranschlußelement als Kupplungsanschlußnippel (10) ausgebildet ist mit einer außenseitigen Rundnut (11), wobei die Kupplungsmuffe (7) mit wenigstens einer Fixierschraube (12) od. dgl. zum Eingriff in die Rundnut (11) versehen ist.

2. Vorrichtung nach Anspruch 1,
dadurch gekennzeichnet,
daß die Kupplungsmuffe (7) auf ihrer Innenseite mit einer Dichtfläche (8) und der Kupplungsanschlußnippel (10) mit wenigstens einer mit dieser Dichtfläche zusammenwirkenden Ringdichtung (9) versehen ist.

3. Vorrichtung nach Anspruch 1 oder 2,
dadurch gekennzeichnet,
daß der Kupplungsnippel (10) mit unterschiedlichen Rohranschlußstutzen (13) vorgesehen sind.

4. Vorrichtung nach Anspruch 1 oder einem der folgenden,
dadurch gekennzeichnet,
daß der Kupplungsnippel (10) mit wenigstens zwei O-Dichtringen (9) versehen ist.

5. Vorrichtung als Rohrkupplung insbesondere nach Anspruch 1,
gekennzeichnet durch
einen Rohranschluß (4,5), der mit einer Kupplungsmuffe (7) versehen ist, die mit einem Rohranschluß-Kupplungsnippel (10) kombinierbar ist, wobei insbesondere die Kupplungsmuffe (7) auf ihrer Innenseite mit einer Dichtfläche (8) und der Kupplungsanschlußnippel (10) mit wenigstens einer mit dieser Dichtfläche zusammenwirkenden Ringdichtung (9) versehen ist.
